# EUROPEAN PATENT SPECIFICATION

(11) **EP 4 190 633 B1**
(45) Date of publication and mention of the grant of the patent: **17.07.2024**
(21) Application number: 21211935.8
(22) Date of filing: 02.12.2021
(51) Int. Cl.: B60P 3/00, B60P 3/14, B60P 7/08

(54) **RACK SYSTEM FOR A COMMERCIAL VEHICLE AND COMMERCIAL VEHICLE**
REGALSYSTEM FÜR EIN NUTZFAHRZEUG SOWIE NUTZFAHRZEUG
SYSTÈME DE RAYONNAGE POUR UN VÉHICULE UTILITAIRE ET VÉHICULE UTILITAIRE

(43) Date of publication of application: 07.06.2023
(73) Proprietor: Ford Global Technologies, LLC, Dearborn, MI 48126 (US)
(72) Inventor: Lem, Jeroen, 6286 CG Wittem (NL); Godin, Keith Allen, Dearborn, MI, 48124 (US); Grein, Marcel, 52511 Geilenkirchen (DE); Eikelenberg, Nicole, 6231 RS Meerssen (NL); Line, Johnathan Andrew, Northville, MI, 48167 (US); Kish, Joseph Michael, Canton, MI, 48187 (US); Moua, Jimmy, Canton, MI, 48187 (US); Longin, David, 3020 Herent (BE); Kuck, Detlef, 52459 Inden (DE)
(74) Representative: Markowitz, Markus

(56) References cited:
- FR-A1- 2 872 462
- US-A- 3 300 056
- US-A1- 2008 193 247
- US-A1- 2017 291 766
- US-A1- 2018 326 885

## Description

The invention relates to a rack system for a commercial vehicle according to the preamble of claim 1. Further, the invention relates to a commercial vehicle having a rear storage compartment.

US 2017 / 291 766 A1 discloses a rack system according to the preamble of claim 1. A Delivery vehicle is described and depicted which serves for delivery, in particular autonomously, of consignments to different sites along a delivery route, with a loading space comprising a shelf system for shelves containing consignments. It is provided that the shelf system is configured to receive shelves in a plurality of storage positions for provision of the shelves and in at least one extraction position for extraction of consignments from the shelves, and that the shelf system has at least one adjustment device for adjusting, in particular moving, the shelves of the shelf system between several storage positions and the at least one extraction position.

A vehicle with a cargo bed according to US 2018 / 326 885 A1 comprises an adapter element arranged in a movable manner along the cargo bed. A support element for at least one functional element is detachably fixed on the adapter element. A guide system for the adapter element comprises at least two parallel guide rails. The adapter element comprises at least two guide elements which engage in the guide rails. At least one guide rail comprises a retaining bead laterally projecting into a guide groove of the guide rail. At least one guide element fixed to the adapter element engages behind the retaining bead, such that a lifting of the adapter element is prevented by the guide rail. The adapter element comprises at least one braking device, which can be brought into operative connection with the cargo bed in order to prevent a displacement of the adapter element on the cargo bed.

A book car, in particular of the type used for swapping books between libraries or for transporting books between a central library and at least one secondary library according to FR 2 872 462 A1 comprises a rear box equipped with at least one series of aligned carriages for storing books, movable in a single direction, so that these carriages can occupy multiple relative positions, including a position in which at least two of said carriages are contiguous and a position in which said carriages are separated in pairs by a space.

US 3 300 056 A1 relates generally to an improved multishelf rack. More particularly, it relates to a rack of this type which is especially well suited for use in the temporary storage of packaged articles which are to be replaced with articles in bulk, or, alternatively, in the temporary storage of articles in bulk which are to be replaced with packaged articles. A rack is presented which includes an upright frame having side walls and a generally horizontal lower wall extending laterally between these side walls to provide a lower shelf. There is at least one additional wall extendible laterally between the side walls for movement between a position in which it is generally horizontal and spaced above the next lower wall and another position in which it depends across the front of the frame above such next lower wall. Suitable means are provided for alternately releasably maintaining each of the individual walls in its generally horizontal position so as to provide an upper shelf and locating such wall in its depending position so as to close the front of the frame.

US 2008 / 193 247 A1 provides a racking system for the storage and transportation of goods. The racking system allows for storage and transportation of an increased amount of goods over a given area of floor space on transportation vehicles, facilitates air flow around goods being shipped to improve refrigeration, increases ease of loading and off-loading goods in relation to a transportation vehicle, and decreases time spent loading and off-loading goods. The racking system can particularly be combined with a railway car for improved long-haul transportation of goods, particularly perishable goods, such as boxed butchered meat product

Commercial vehicles can be used by a multitude of users with a very wide range of applications. A lot of the users place racks in a rear storage compartment of a commercial vehicle to store parts and/or tools and/or parcels, like, for example, a crafts-man/handyman, who has a lot of items in the vehicle. But also for package delivery rack space is needed for all the packages.

Rack space is the ideal way to maximize load capacity of a commercial vehicle when the user has a lot of (relatively small) items to carry in the commercial vehicle, e.g. a van. But not all items can be stored in a rack, as they might be too big or too heavy. This leads to a trade-off between the available rack space and space for other items in the commercial vehicle.

Conventionally, the space for racks is limited to the left-side and right-side panels of the rear storage compartment of a commercial vehicle, where on one side usually space is taken away due to a sliding door at this position. This leads to the fact that the commercial vehicle space is not completely occupied and also that the commercial vehicle is still well underneath its capacity.

US 6 464 274 B2 relates to a slidable extensible platform for use with a motor vehicle cargo area having a cargo bed.

US 9 381 871 B2 relates to a cargo organizer for a vehicle. The cargo organizer comprises a frame at least partially forming a floor of a cargo area of the vehicle, and one or more elongate elements extendable across an opening defined by the frame, wherein the elongate elements engage the frame and are slidable with respect to the frame.

US 10 882 456 B2 relates to a rail system for mounting to a vehicle. The rail system comprises a frame mountable in the cargo area of a vehicle, a first fixed rail mounted to the frame, a first sliding rail slidably mounted on the first fixed rail for longitudinal movement relative to the first fixed rail, and a first panel coupled to the first sliding rail.

US 5 161 700 A relates to an adjustable storage system for vehicles. The system comprises a substantially flat base including means for securing said base within a vehicle, an upright fixed planar sidewall attached to the flat base, and an upright movable planar sidewall which is slidably adjustable and which cooperates with said fixed sidewall to provide lateral support to packages placed therebetween, said movable planar sidewall including first and second ends and being oriented generally parallel to said fixed planar sidewall. Furthermore, the system comprises means for slidably mounting said movable sidewall to said base for movement toward and away from said fixed sidewall, and cable means coupled to said first and second ends of said movable sidewall and said base for maintaining the general parallel orientation of said movable planar sidewall to said fixed planar sidewall as said movable planar sidewall is moved to thereby prevent binding as said movable sidewall is moved against packages placed on said base, said cable being substantially fixed in length. Further, the system comprises means for locking said movable sidewall into at least one use position.

DE 10 2014 001 031 A1 relates to a method for assisted loading of a motor vehicle which is loaded with at least one transport load which is detected by a sensor device and output as load information by an output device of the motor vehicle. The method comprising the steps of detecting a change in the sprung vehicle mass, which is correlated with the transport load, by means of a plurality of sensor devices arranged in the motor vehicle and generating signals corresponding to the change in the sprung vehicle mass and transmitting the signals to a central control unit of the motor vehicle, determining and evaluating the at least one transport load by the central control unit from the signals, taking into account the unsprung vehicle mass stored in the central control unit, generating the at least one load information, which concerns the transport load, by the central control unit and transmitting the at least one load information to the output device, and issuing of the load information by the output device.

It is an object of the invention to provide a more efficient way of offering rack space to get a better trade-off between the amount of racks and space for other items, to maximize the utilization rate of a rear storage compartment of a commercial vehicle and to laterally balance a loading of a commercial vehicle.

According to the invention this object is solved by a rack system with the features of claim 1.

A Rack system for a commercial vehicle is presented, comprising at least one guide rail fixable to at least one vehicle structure of the commercial vehicle within a rear storage compartment of the commercial vehicle, wherein at least two racks slidingly supported by the guide rail back and forth in a lateral direction of the commercial vehicle and arranged in series to each other with respect to the guide rail. According to the invention at least one electrically controllable actuator for slidingly moving said rack along the guide rail, at least one sensor unit for detecting a current lateral inclination state of the commercial vehicle, and at least one electronic control unit suitable to control the actuator according to the current lateral inclination state of the commercial vehicle, so that the lateral inclination of the commercial vehicle becomes minimal or zero.

It should be noted that the features and measures listed individually in the following description can be combined with each other in any technically useful manner and show further embodiments of the invention. The following description additionally characterizes and specifies the invention, in particular in connection with the figures.

By moving the racks relative to each other, the user can get access to each of the individual racks. This creates a unique solution, where a lot of rack space is created in a small volume of the rear storage compartment, optimizing the utilization rate of the commercial vehicle, and maximizing the efficiency of the user's business. Additionally, the invention allows to leave a lot of floor space in the rear storage compartment for large items, that can be positioned at the sliding door, for example. The rack system can be formed so that a space between the adjacent racks moved away from each other in opposite directions could be large enough for a user to walk through, for example, to the front part of the rear storage compartment. Additionally, the rack system can be formed so that, if all racks are moved to one side, a path can be on the other side of the racks where the user could walk through, for example, to the front part of the rear storage compartment. The number of racks of the rack system can be chosen depending on the required rack depth and the dimensions and amount of the cargo to be carried with the commercial vehicle. Therefore, the invention provides a more efficient way of offering rack space in the commercial vehicle to get a better trade-off between the amount of racks and space for other items, to maximize the utilization rate of a rear storage compartment of the commercial vehicle.

The racks could also be used and positioned to retain larger pieces of cargo between them. For example, for they could be used to clamp and therefore retain longer tubes or wooden posts.

The guide rail can be fixed to a floor structure of the rear storage compartment of the commercial vehicle, for example. The rack system may comprise two or more guide rails arranged parallel to each other and laterally spaced from each other in the lateral direction of the commercial vehicle.

For slidingly supporting the racks by the guide rail back and forth in a lateral direction of the commercial vehicle each rack may comprise at least one carriage slidably connecting the rack with the guide rail. Therefore, the respective rack and the guide rail may create a sliding guide. Alternately, the respective rack and the guide rail may create rolling element guide. The racks extend in the longitudinal or lateral direction of the commercial vehicle. Additionally, at least one of the racks may at least partly be extractable in the longitudinal or lateral direction of the vehicle, i. e. in a direction laterally to the guide rail, to be placed at least partly outside the rear storage compartment. The racks can be moved independently.

Another advantage of the invention is that a loading of the commercial vehicle having a rear storage compartment can be laterally balanced by temporary fixing each rack selectively in one of several fixing positions disposed along the guide rail by fixing the respective rack to the guide rail and/or to the vehicle structure. Through this, the lateral weight distribution of the loaded commercial vehicle can be optimized. This advantage can be achieved by mounting the at least one guide rail in such a way that it extends in the lateral direction of the commercial vehicle.

Conventionally, there is often an uneven lateral weight distribution of a loaded commercial vehicle leading to one side being more loaded than the other side, wherein the commercial is leaning over to that side that is loaded more. This leads to uneven wear and tear of commercial vehicle components, like tires, and to uneven handling characteristics of the commercial vehicle. These disadvantages could also be minimized or eliminated by the invention.

The simplest way to achieve the load balancing according to the invention is a manual actuation of each rack, either by direct manual actuation of the rack or by indirect manual actuation on the rack by means of a mechanical actuation device of any kind. Through this, a user can move and afterwards fix the racks in that positions of the several fixing positions disposed along the guide rail that seem to the user to cause an optimal lateral weight distribution.

According to an advantageous embodiment the rack system comprises at least one fixing unit for each rack for temporary fixing the respective rack selectively in one of several fixing positions disposed along the guide rail by fixing the respective rack to the guide rail and/or to the vehicle structure. Through this, each rack can be secured in one of several positions so that, when driving a corresponding commercial vehicle, a movement of the racks is reliably prevented.

According to a further advantageous embodiment the fixing unit is self-locking and/or manually operatable and/or electromechanically operatable. The respective fixing unit can be a mechanical unit that can be operated manually. Alternatively, the respective fixing unit can be a electromechanical unit that can be activated automatically. The fixing unit, for example, can be formed like a fixing unit of a conventional adjustment device for back and forth adjustment of a vehicle, i. e. the respective rack can be fixed to the guide rail at certain fixing positions arranged at equal distances from each other.

According to a further advantageous embodiment the rack system comprises at least one manually operatable actuation unit for each rack for moving the respective rack along the guide rail, wherein the actuation unit comprises at least one carrying wheel arranged at the bottom of the respective rack and at least one manually operatable drive unit arranged on the respective rack for driving the carrying wheel, and wherein the drive unit comprises at least one manually operatable actuation element arranged on a side of the respective rack being accessible through a rear opening of the rear storage compartment. Through this, the rack system can be formed like a conventional library system having a manually operatable actuation element in the form of a wheel or the like for each rack to drive the respective rack along the guide rail. By actuation, for example turning, the manually operatable actuation element the carrying wheel is driven so that the respective rack is pulled be means of the rack along the guide rail, wherein the carrying wheel can contact the guide rail and/or the floor of the rear storage compartment. Any kind of transmission can be used to transmit a force from the manually operatable actuation element of the respective rack to the carrying wheel of this rack.

According to a further advantageous embodiment the rack system comprises at least one electromechanical actuation unit for each rack for moving the respective rack along the guide rail. Therefore, a user doesn't have to pull the racks manually. Instead, the racks can be moved automatically when the user operates a corresponding operation unit connected with the electromechanical actuation unit, for example a unit with switches, a touchscreen or else.

According to the invention, as described above, the rack system comprises at least one electrically controllable actuator for slidingly moving said rack along the guide rail, at least one sensor unit for detecting a current lateral inclination state of the commercial vehicle, and at least one electronic control unit suitable to control the actuator according to the current lateral inclination state of the commercial vehicle, so that the lateral inclination of the commercial vehicle becomes minimal or zero. To achieve this embodiment the guide rail is mounted in such a way that it extends in the lateral direction of the commercial vehicle. The electrically controllable actuator may be an electromechanical actuator with or without a transmission. The electrically controllable actuator can act like an conventional electronic adjustment of memory vehicle seats. The sensor unit may be suitable for determining the current lateral imbalance of the loaded commercial vehicle and/or the lateral position of the center of mass of the loaded commercial vehicle. The electronic control unit controls the electrically controllable actuator until the commercial vehicle is laterally balanced as good as possible.

According to a further advantageous embodiment the sensor unit comprises at least one load sensor, at least one dynamics sensor, and/or at least one crash sensor. The dynamics sensor can be an ABS sensor.

According to a further advantageous embodiment the rack system comprises at least one anti-pinch unit connected with the control unit. Through this, there can be provided a pinch recognition, so that any motion of the rack can be stopped immediately when it is sensed that there is too much resistance to the movement of the rack. The pinch-recognition unit may have at least one sensor or may be formed to determine the current resistance value from current electric characteristics of the electrically controllable actuator. Alternatively, the anti-pinch unit can be integrated in the electronic control unit.

According to the invention the above-mentioned object is furthermore solved by a commercial vehicle with the features of claim 8, comprising at least one rack system according to one of the preceding embodiments or a combination of at least two of these embodiments with each other, wherein the rack system is accessible through a rear load opening of the commercial vehicle.

The advantages mentioned above with reference to the rack system are correspondingly associated with the commercial vehicle. The racks can be located in a part of the rear storage compartment that is arranged between the rear opening of the rear storage compartment and the lateral sliding door.

Further advantageous embodiments of the invention are disclosed in the dependent claims and the following figure description. It shows
- Fig. 1a: a schematic top view of an embodiment of a commercial vehicle according to the invention,
- Fig. 1b: a further schematic top view of the commercial vehicle shown in Fig. 1a and
- Fig. 2: a further schematic to view of the commercial vehicle shown in Figs. 1a and 1b.

In the various figures, the same parts are always provided with the same reference signs, which is why they are generally described only once.

Embodiments of the invention are described hereinafter. It is to be understood, however, that the disclosed embodiments are merely examples and other embodiments may take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

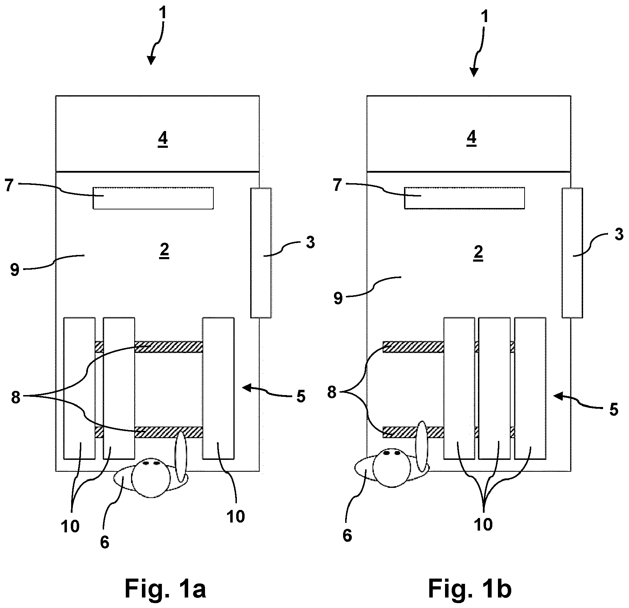

Fig. 1a shows a schematic top view of an embodiment of a commercial vehicle 1 according to the invention. The commercial vehicle 1 has a rear storage compartment 2 that can be closed at its rear end by two doors (not shown) and is laterally closed by a sliding door 3. The commercial vehicle 1 further comprises a driver cabin 4 in front of the rear storage compartment 2.

The commercial vehicle 1 comprises a rack system 5 being accessible for a user 6 through a rear load opening (not shown) of the commercial vehicle 1. The rack system 5 mainly extends between the rear load opening and the sliding door 4. In the front part of the rear storage compartment 2 there is a fixed rack 7.

The rack system 5 comprises two guide rails 8 fixed to a floor 9 of the rear storage compartment 2 of the commercial vehicle 1. The guide rails 8 are arranged parallel to each other and laterally spaced from each other. The guide rails 8 extend in the lateral direction of the commercial vehicle 1.

Furthermore, the rack system 5 comprises three racks 10 slidingly supported by the guide rails 7 back and forth in the lateral direction of the commercial vehicle 1.

Moreover, the rack system 5 comprises at least one at least one fixing unit (not shown) for each rack 10 for temporary fixing the respective rack 10 selectively in one of several fixing positions disposed along the guide rails 8 by fixing the respective rack 10 to the guide rails 8 and/or to the floor 9. The respective fixing unit can be self-locking and/or manually operatable and/or electromechanically operatable.

Additionally, the rack system 5 may comprise at least one manually operatable actuation unit (nor shown) for each rack 10 for moving the respective rack 10 along the guide rails 8, wherein the actuation unit may comprise at least one carrying wheel (not shown) arranged at the bottom of the respective rack 10 and at least one manually operatable drive unit (not shown) arranged on the respective rack 10 for driving the carrying wheel, and wherein the drive unit may comprise at least one manually operatable actuation element (not shown) arranged on a side of the respective rack 19 being accessible through the rear opening of the rear storage compartment 2.

Alternatively, the rack system may comprise at least one electromechanical actuation unit (not shown) for each rack 10 for moving the respective rack 10 along the guide rails 8.

Moreover, the rack system 5 may comprise at least one electrically controllable actuator (not shown) for slidingly moving said rack 10 along the guide rails 8, at least one sensor unit (not shown) for detecting a current lateral inclination state of the commercial vehicle 1, and at least one electronic control unit (not shown) suitable to control the actuator according to the current lateral inclination state of the commercial vehicle 1, so that the lateral inclination of the commercial vehicle 1 becomes minimal or zero. For this, the sensor unit may comprise at least one load sensor (not shown), at least one dynamics sensor (not shown), and/or at least one crash sensor (not shown).

Further, the rack system 5 may comprise at least one anti-pinch unit (not shown) connected with the control unit.

Fig. 1b shows a further schematic top view of the commercial vehicle 1 shown in Fig. 1a in a balanced loading state. The state shown in Fig. 1b emanates from the state shown in Fig. 1a by a lateral displacement of the two racks 10 arranged on the left side in Fig. 1a. Therefore, another one of the racks 10 is accessible for the user 6.

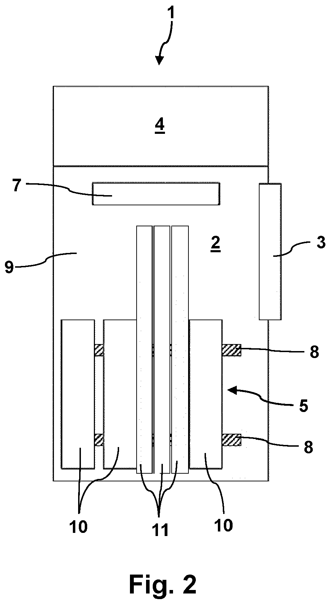

Fig. 2 shows a further schematic top view of the commercial vehicle 1 shown in Figs. 1a and 1b. In Fig. 2 two racks 10 are additionally used to clamp three wooden posts 11 between these racks 10.

### Reference signs

- 1: commercial vehicle
- 2: rear storage compartment
- 3: sliding door
- 4: driver cabin
- 5: rack system
- 6: user
- 7: fixed rack
- 8: guide rail
- 9: floor
- 10: rack
- 11: wooden post

## Claims

1. Rack system (5) for a commercial vehicle (1), comprising at least one guide rail (8) fixable to at least one vehicle structure of the commercial vehicle (1) within a rear storage compartment (2) of the commercial vehicle (1), wherein at least two racks (10) slidingly supported by the guide rail (8) back and forth in a lateral direction of the commercial vehicle (1) and arranged in series to each other with respect to the guide rail (8)
**characterized by**
at least one electrically controllable actuator for slidingly moving said rack (10) along the guide rail (8), at least one sensor unit for detecting a current lateral inclination state of the commercial vehicle (1), and at least one electronic control unit suitable to control the actuator according to the current lateral inclination state of the commercial vehicle (1), so that the lateral inclination of the commercial vehicle (1) becomes minimal or zero.

2. Rack system (5) according to claim 1,
**characterized by**
at least one fixing unit for each rack (10) for temporary fixing the respective rack (10) selectively in one of several fixing positions disposed along the guide rail (8) by fixing the respective rack (10) to the guide rail (8) and/or to the vehicle structure.

3. Rack system (5) according to claim 2,
**characterized in that**
the fixing unit is self-locking and/or manually operatable and/or electromechanically operatable.

4. Rack system (5) according to one of the preceding claims,
**characterized by**
at least one manually operatable actuation unit for each rack (10) for moving the respective rack (10) along the guide rail (8), wherein the actuation unit comprises at least one carrying wheel arranged at the bottom of the respective rack (10) and at least one manually operatable drive unit arranged on the respective rack (10) for driving the carrying wheel, and wherein the drive unit comprises at least one manually operatable actuation element arranged on a side of the respective rack (10) being accessible through a rear opening of the rear storage compartment (2).

5. Rack system (5) according to one of the claims 1 to 3,
**characterized by**
at least one electromechanical actuation unit for each rack (10) for moving the respective rack (10) along the guide rail (8).

6. Rack system (5) according to claim 1,
**characterized by**
at least one the sensor unit comprises at least one load sensor, at least one dynamics sensor, and/or at least one crash sensor.

7. Rack system (5) according to claim 1 or 6,
**characterized by**
at least one anti-pinch unit connected with the control unit.

8. Commercial vehicle (1) having a rear storage compartment (2),
**characterized by**
at least one rack system (5) according to one of the preceding claims, wherein the rack system (5) is accessible through a rear load opening of the commercial vehicle (1).

## Patentansprüche

1. Regalsystem (5) für ein Nutzfahrzeug (1), umfassend mindestens eine Führungsschiene (8), die an mindestens einer Fahrzeugstruktur des Nutzfahrzeugs (1) innerhalb eines hinteren Stauraums (2) des Nutzfahrzeugs (1) fixierbar ist, wobei mindestens zwei Regale (10) von der Führungsschiene (8) in Seitenrichtung des Nutzfahrzeugs (1) vor und zurück verschiebbar gelagert und in Bezug zur Führungsschiene (8) hintereinander angeordnet sind, **gekennzeichnet durch**
mindestens ein elektrisch steuerbares Stellglied zum Verschieben des Regals (10) entlang der Führungsschiene (8), mindestens eine Sensoreinheit zum Erfassen eines aktuellen Seitenneigungszustands des Nutzfahrzeugs (1) und mindestens eine elektronische Steuereinheit, die dazu geeignet ist, das Stellglied entsprechend des aktuellen Seitenneigungszustands des Nutzfahrzeugs (1) zu steuern, sodass die Seitenneigung des Nutzfahrzeugs (1) minimal oder gleich null wird.

2. Regalsystem (5) nach Anspruch 1,
**gekennzeichnet durch**
mindestens eine Fixierungseinheit für jedes Regal (10) zum vorübergehenden selektiven Fixieren des jeweiligen Regals (10) in einer von mehreren Fixierungspositionen, die entlang der Führungsschiene (8) angeordnet sind, durch Fixieren des jeweiligen Regals (10) an der Führungsschiene (8) und/oder an der Fahrzeugstruktur.

3. Regalsystem (5) nach Anspruch 2,
**dadurch gekennzeichnet, dass**
die Fixierungseinheit selbstverriegelnd und/oder manuell betätigbar und/oder elektromechanisch betätigbar ist.

4. Regalsystem (5) nach einem der vorstehenden Ansprüche,
**gekennzeichnet durch**
mindestens eine manuell betätigbare Stellgliedeinheit für jedes Regal (10), um das jeweilige Regal (10) entlang der Führungsschiene (8) zu bewegen, wobei die Stellgliedeinheit mindestens ein Trägerrad umfasst, das am Boden des jeweiligen Regals (10) angeordnet ist, und mindestens eine manuell betätigbare Antriebseinheit, die am jeweiligen Regal (10) angeordnet ist, um das Trägerrad anzutreiben, und wobei die Antriebseinheit mindestens ein manuell betätigbares Stellgliedelement umfasst, das auf einer Seite des jeweiligen Regals (10) angeordnet und durch eine hintere Öffnung des hinteren Stauraums (2) zugänglich ist.

5. Regalsystem (5) nach einem der Ansprüche 1 bis 3, **gekennzeichnet durch**
mindestens eine elektromechanische Stellgliedeinheit für jedes Regal (10), um das jeweilige Regal (10) entlang der Führungsschiene (8) zu bewegen.

6. Regalsystem (5) nach Anspruch 1,
**gekennzeichnet durch**
mindestens eine Sensoreinheit, die mindestens einen Lastsensor, mindestens einen Dynamiksensor und/oder mindestens einen Aufprallsensor umfasst.

7. Regalsystem (5) nach Anspruch 1 oder 6,
**gekennzeichnet durch**
mindestens eine mit der Steuereinheit verbundene Klemmschutzeinheit.

8. Nutzfahrzeug (1) mit einem hinteren Stauraum (2), **gekennzeichnet durch**
mindestens ein Regalsystem (5) nach einem der vorstehenden Ansprüche, wobei das Regalsystem (5) durch eine hintere Ladeöffnung des Nutzfahrzeugs (1) zugänglich ist.

## Revendications

1. Système de rayonnage (5) pour un véhicule utilitaire (1), comprenant au moins un rail de guidage (8) pouvant être fixé à au moins une structure de véhicule du véhicule utilitaire (1) dans un compartiment de stockage arrière (2) du véhicule utilitaire (1), dans lequel au moins deux rayonnages (10) supportés de manière coulissante par le rail de guidage (8) d'avant en arrière dans une direction latérale du véhicule utilitaire (1) et disposés en série les uns aux autres par rapport au rail de guidage (8)
**caractérisé par**
au moins un actionneur à commande électrique pour déplacer par glissement ledit rayonnage (10) le long du rail de guidage (8), au moins une unité de détection pour détecter l'état actuel de l'inclinaison latérale du véhicule utilitaire (1), et au moins une unité de commande électronique apte à commander l'actionneur en fonction de l'état actuel de l'inclinaison latérale du véhicule utilitaire (1), de manière à ce que l'inclinaison latérale du véhicule utilitaire (1) devienne minime ou nulle.

2. Système de rayonnage (5) selon la revendication 1,
**caractérisé par**
au moins une unité de fixation pour chaque rayonnage (10) afin de fixer temporairement le rayonnage respectif (10) sélectivement dans l'une des nombreuses positions de fixation disposées le long du rail de guidage (8) en fixant le rayonnage respectif (10) au rail de guidage (8) et/ou à la structure de véhicule.

3. Système de rayonnage (5) selon la revendication 2,
**caractérisé en ce que**
l'unité de fixation est autobloquante et/ou actionnable manuellement et/ou électromécaniquement.

4. Système de rayonnage (5) selon l'une des revendications précédentes,
**caractérisé par**
au moins une unité d'actionnement actionnable manuellement pour chaque rayonnage (10) afin de déplacer le rayonnage respectif (10) le long du rail de guidage (8), l'unité d'actionnement comprenant au moins une roue porteuse disposée au bas du rayonnage respectif (10) et au moins une unité d'entraînement actionnable manuellement disposée sur le rayonnage respectif (10) pour entraîner la roue porteuse, et l'unité d'entraînement comprenant au moins un élément d'actionnement actionnable manuellement disposé sur un côté du rayonnage respectif (10) accessible par une ouverture arrière du compartiment de stockage arrière (2) .

5. Système de rayonnage (5) selon l'une des revendications 1 à 3,
**caractérisé par**
au moins une unité d'actionnement électromécanique pour chaque rayonnage (10) afin de déplacer le rayonnage respectif (10) le long du rail de guidage (8).

6. Système de rayonnage (5) selon la revendication 1,
**caractérisé par**
au moins l'une des unités de détection comprend au moins un capteur de charge, au moins un capteur de dynamique et/ou au moins un capteur de collision.

7. Système de rayonnage (5) selon la revendication 1 ou 6,
**caractérisé par**
au moins une unité anti-pincement reliée à l'unité de commande.

8. Véhicule utilitaire (1) comportant un compartiment de stockage arrière (2),
**caractérisé par**
au moins un système de rayonnage (5) selon l'une des revendications précédentes, le système de rayonnage (5) étant accessible par une ouverture de chargement arrière du véhicule utilitaire (1).
